# EUROPEAN PATENT APPLICATION

(11) **EP 3 425 614 A1**
(43) Date of publication of application: **09.01.2019**
(21) Application number: 16892440.5
(22) Date of filing: 29.02.2016
(51) Int. Cl.: G09C 1/00, G06F 21/60, H04L 9/14

(54) **DATA PROCESSING METHOD AND DATA PROCESSING SYSTEM**

(71) Applicant: Hitachi, Ltd., Chiyoda-ku Tokyo 100-8280 (JP)
(72) Inventor: NAGANUMA, Ken, Tokyo 100-8280 (JP); SATO, Hisayoshi, Tokyo 100-8280 (JP); YOSHINO, Masayuki, Tokyo 100-8280 (JP)
(74) Representative: Strehl Schübel-Hopf & Partner
(86) International application number: PCT/JP2016/056041
(87) International publication number: WO 2017/149595

(57) **Abstract**

A data processing method performed by a computer system including a first computer, a second computer, and a third computer includes a step of, by the first computer, encrypting first data with a first encryption key and transmitting the first data encrypted with the first encryption key to the third computer, a step of, by the second computer, encrypting second data with a second encryption key and transmitting the second data encrypted with the second encryption key to the third computer, and a step of, by the third computer, generating, with a key exchange key for exchanging the second encryption key for the first encryption key, the second data encrypted with the first encryption key from the second data encrypted with the second encryption key.

## Description

### Technical Field

The present invention relates to analysis of encrypted data.

### Background Art

In recent years, big data business that collects and analyzes a large amount of data and extracts valuable knowledge has been spreading. In order to analyze a large amount of data, large capacity storage, high-speed CPUs, and a system that distributes and controls them are required, and the analysis can be requested to an outside resource such as cloud computing. However, when data is outsourced to the outside, privacy issues arise. For this reason, a secret analysis technique for outsourcing and analyzing data after encryption or other privacy protection techniques are applied has attracted attention (for example, see PTL 1). In addition, in the case of analyzing a small amount of confidential data, it has been attempted to improve the analysis accuracy by inputting both a large amount of open data (data available to the public) and

### confidential data.

### Citation List

### Patent Literature

PTL 1: WO 2015/063905 A

### Summary of Invention

### Technical Problem

For the above privacy issues that arise during data analysis, for example, PTL 1 proposes a method in which an analysis data provider encrypts data using a searchable encryption that can be text-matched while data is encrypted, and an analyzer performs cross tabulation and correlation rule analysis using a text matching function. In this method, all encrypted data to be analyzed needs to be encrypted with the same secret key. However, when using open data (data available to the public) as input data, it is necessary for the data provider to encrypt the open data with their own secret key, and the encryption load becomes high when the data amount is large. On the other hand, when the data provider requests an analyzer or a third party to encrypt the open data in order to reduce the load on the data provider, it is necessary for the data provider to pass their own secret key to the analyzer or the like, and which increases leakage risks of the key.

### Solution to Problem

A representative example of the present invention for solving the above problem is as follows. That is, a data processing method performed by a computer system including a first computer including a first processor and a first memory connected to the first processor, a second computer including a second processor and a second memory connected to the second processor, and a third computer including a third processor and a third memory connected to the third processor, the data processing method includes a first step of, by the first processor, encrypting first data stored in the first memory with a first encryption key and transmitting the first data encrypted with the first encryption key to the third computer, a second step of, by the second processor, encrypting second data stored in the second memory with a second encryption key and transmitting the second data encrypted with the second encryption key to the third computer, and a third step of, by the third processor, generating, with a key exchange key for exchanging the second encryption key for the first encryption key, the second data encrypted with the first encryption key from the second data encrypted with the second encryption key.

### Advantageous Effects of Invention

According to an embodiment of the present invention, it is possible to analyze data to which open data available to the public is added as an input data source while the data privacy of an analysis data provider is protected and the processing load on the analysis data provider is reduced.

### Brief Description of Drawings

[FIG. 1] FIG. 1 is a block diagram schematically showing a data analysis system according to an embodiment of the present invention.
[FIG. 2] FIG. 2 is a block diagram schematically showing hardware of a data-provider terminal according to the embodiment of the present invention.
[FIG. 3] FIG. 3 is a flowchart showing a process performed in the data analysis system according to the embodiment of the present invention.
[FIG. 4] FIG. 4 is an explanatory diagram of an example of an encryption process using an encryption key A and an encryption key B in the embodiment of the present invention.
[FIG. 5] FIG. 5 is an explanatory diagram of an example of a process for generating a key exchange key for exchanging an encryption key B for an encryption key A in the embodiment of the present invention.
[FIG. 6] FIG. 6 is an explanatory diagram of an example of a key exchange process using a key exchange key for exchanging an encryption key B for an encryption key A in the embodiment of the present invention.

### Description of Embodiments

Hereinafter, as the present invention, an embodiment of a method for encrypting confidential data of a data provider and analyzing, by an analyzer, the confidential data and public data of a public-data provider which are being encrypted is described in detail with reference to the drawings. In this embodiment, a detailed method of an encryption-state analysis process to encrypted data is not mentioned, but an existing method of the encryption-state analysis process disclosed in PTL 1 may be used, for example.

Here, the outline of the embodiment of the present invention is described.

In order to solve the problem that a data provider having a few resources needs to encrypt a large amount of open data to make the key for encrypting the open data the same as that of confidential data, and which increases the load on the data provider, a method using a key exchange technique can be used. The key exchange technique (also referred to as a re-encryption technique) is a generic name for techniques for converting ciphertext encrypted with a key A into ciphertext encrypted with a key B (without changing the plaintext information), and is roughly divided into a common key cryptosystem and a public key cryptosystem. Its characteristic is that a key exchange key dedicated for conversion, which is different from both key A and key B, is used to convert ciphertext, and neither the key A nor the key B is required. As a result, it is unnecessary to provide the key A and the key B to an entity that exchanges keys, and it is possible to exchange keys while the key A, the key B, and the plaintext information are kept secret. With this key exchange technique, it is possible for a third party to encrypt open data with a key B, for an analyzer to perform the analysis by converting the key B to a key A of a data provider with a key exchange key and by unifying the keys, and it is possible to eliminate the load on the data provider to encrypt the open data.

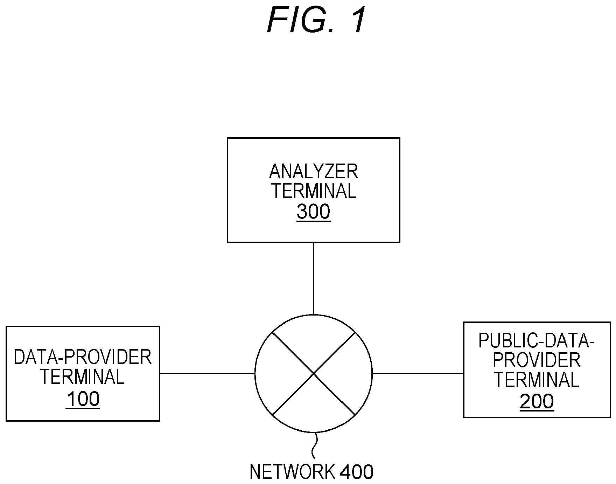

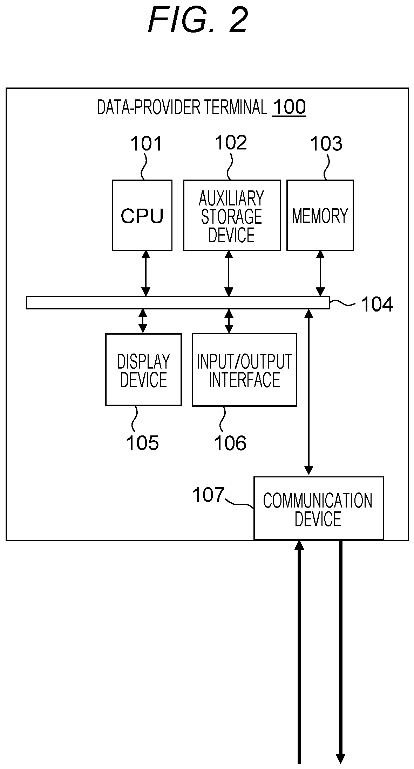

Hereinafter, a system configuration of the present embodiment is described with reference to FIGS. 1 and 2.

FIG. 1 is a block diagram schematically showing a data analysis system according to the embodiment of the present invention.

As shown in the drawing, the system is designed so that a data-provider terminal 100 that holds confidential data, a public-data-provider terminal 200 that holds public data, and an analyzer terminal 300 that analyze encrypted data by a method as disclosed in PTL 1 or the like are able to transmit and receive information mutually via a network 400.

FIG. 2 is a block diagram schematically showing hardware of the data-provider terminal 100 according to the embodiment of the present invention.

As shown in the drawing, the data-provider terminal 100 is configured so that a central processing unit (CPU) 101, an auxiliary storage device 102, a memory 103, a display device 105, an input/output interface 106, and a communication device 107 are connected by an internal signal line 104. The auxiliary storage device 102 stores program codes. The program codes are loaded into the memory 103 and executed by the CPU 101. The communication device 107 is connected to the network 400, and transmits and receives data to and from the analyzer terminal 300 or the public-data-provider terminal 200.

The public-data-provider terminal 200 and the analyzer terminal 300 each have a similar hardware configuration.

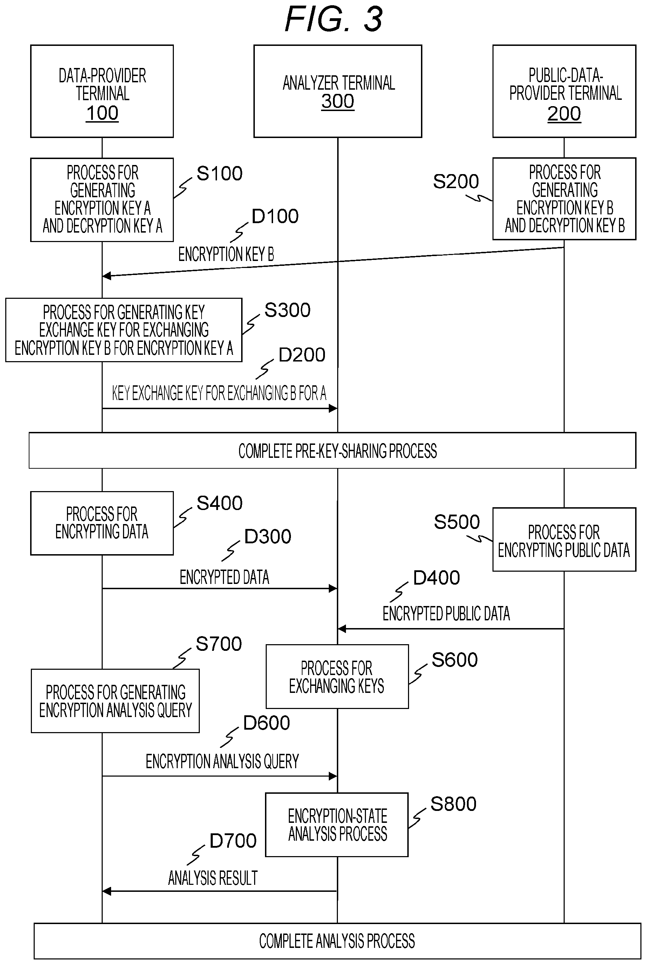

Hereinafter, a processing procedure of the data analysis system according to the present embodiment is described with reference to FIG. 3.

Terms used in the present embodiment are defined.

### (1) Cryptographic algorithm

A cryptographic algorithm includes three algorithms of a key generating algorithm for generating an encryption key and a decryption key, an encrypting algorithm for inputting plaintext data and the encryption key and outputting ciphertext (also referred to as encrypted data), and a decrypting algorithm for inputting the ciphertext and the decryption key and outputting plaintext corresponding to the ciphertext. A cryptographic algorithm in which an encryption key and a decryption key are the same binary data is referred to as a common key cryptographic algorithm, and a cryptographic algorithm in which an encryption key and a decryption key are different is referred to as a public key cryptographic algorithm. In the present embodiment, the common key cryptographic algorithm is treated as the cryptographic algorithm unless otherwise noted.

### (2) Encryption-state analyzing cryptographic algorithm

An encryption-state analyzing cryptographic algorithm is the above cryptographic algorithm, and further includes two algorithms of an encryption-analysis-query generating algorithm and an encryption-state-analysis processing algorithm. The encryption-analysis-query generating algorithm is for inputting the plaintext and the decryption key and outputting an encryption analysis query corresponding to the plaintext. The encryption-state-analysis processing algorithm is for inputting the ciphertext and the encryption analysis query and outputting a certain analysis result. The present embodiment is described based on the assumption that one cryptosystem for encryption-state analysis is to be used. As a specific cryptosystem, an existing cryptosystem as disclosed in PTL 1 may be used.

### (3) Key exchangeable cryptographic algorithm

A key exchangeable cryptographic algorithm is the above encryption-state analyzing cryptographic algorithm, and further includes a key-exchange-key generating algorithm and a key exchanging algorithm. The key-exchange-key generating algorithm is for inputting an encryption key A and an encryption key B and outputting a key exchange key for exchanging the encryption key B for the encryption key A. The key exchanging algorithm is for inputting ciphertext encrypted with the encryption key B and the key exchange key for exchanging the encryption key B for the encryption key A and outputting ciphertext having the same plaintext information and encrypted with the encryption key A, that is, for exchanging keys from the encryption key B to the encryption key A without changing the plaintext information.

The ciphertext the key of which is exchanged in this manner can be decrypted with a decryption key A corresponding to the encryption key A, and the plaintext obtained thereby is the same plaintext as that before encrypted with the encryption key B. In the process for exchanging keys, it is unnecessary to temporarily decrypt ciphertext and generate plaintext. Furthermore, it is extremely difficult to guess the encryption key A and the encryption key B from the key exchange key for exchanging the encryption key B for the encryption key A.

FIG. 3 is a flowchart showing a process performed in the data analysis system according to the embodiment of the present invention.

Specifically, FIG. 3 is a processing procedure for data transmission/reception and programs among the data-provider terminal 100, the public-data-provider terminal 200, and the analyzer terminal 300. The processing procedure includes two phases of a pre-key-sharing processing phase and an analysis processing phase.

First, the data-provider terminal 100 executes a key generating algorithm for generating an encryption key and a decryption key in a cryptographic algorithm, and generates an encryption key A and a decryption key A (S100). On the other hand, the public-data-provider terminal 200 similarly executes the key generating algorithm for generating an encryption key and a decryption key in the cryptographic algorithm, and generates an encryption key B and a decryption key B (S200).

In the present embodiment, as long as the same cryptographic algorithm is used in S100 and S200, a key exchange key for the keys generated thereby can be generated, and an encryption-state analysis process can be performed, any cryptographic algorithm may be used. That is, the cryptographic algorithm to be used may be either a common key cryptographic algorithm or a public key cryptographic algorithm. When the common key cryptographic algorithm is used, the encryption key A and the decryption key A are the same, and the encryption key B and the decryption key B are the same.

Next, the public-data-provider terminal 200 transmits the encryption key B (D100) generated in S200 to the data-provider terminal 100. Next, the data-provider terminal 100 inputs the encryption key A and the encryption key B held by itself, executes a key-exchange-key generating algorithm, and generates a key exchange key for exchanging the encryption key B for the encryption key A (S300) . Next, the data-provider terminal 100 transmits the key exchange key for exchanging the encryption key B for the encryption key A generated in S300 to the analyzer terminal 300, and completes the pre-key-sharing processing phase.

In the analysis processing phase, first, the data-provider terminal 100 encrypts confidential data held by itself with the encryption key A (S400), and transmits it to the analyzer terminal 300 as encrypted data (D300). On the other hand, the public-data-provider terminal 200 encrypts public data held by itself with the encryption key B (S500), and transmits it to the analyzer terminal 300 as encrypted public data (D400). At the time when receiving these pieces of data, the analyzer terminal 300 holds the confidential data encrypted with the encryption key A and the encrypted public data encrypted with the encryption key B. It should be noted that the analyzer terminal 300 holds two pieces of data encrypted with different keys.

Next, the analyzer terminal 300 inputs the encrypted public data (D400) and the key exchange key (D200) for exchanging the encryption key B for the encryption key A, executes a key exchanging algorithm (S600), and generates encrypted public data (D500) encrypted with the encryption key A. Next, the data-provider terminal 100 inputs the decryption key A, executes an encryption-analysis-query generating algorithm (S700), generates an encryption analysis query (D600), and transmits it to the analyzer terminal 300. Next, the analyzer terminal 300 inputs the encrypted data (D300), the encrypted public data (D500), and the encryption analysis query (D600) and executes an encryption-state analysis process (S800), generates an analysis result (D700), transmits the analysis result (D700) to the data-provider terminal 100, and terminates the analysis processing.

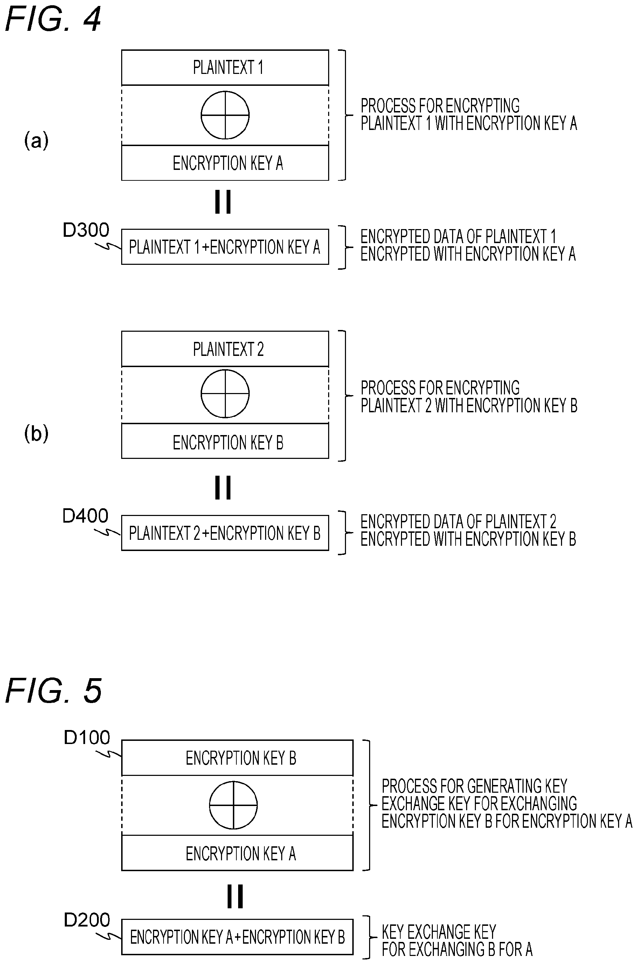

FIG. 4 is an explanatory diagram of an example of the encryption process (S400 and S500) using the encryption key A and the encryption key B in the embodiment of the present invention.

As shown in FIG. 4(a), the data-provider terminal 100 generates, for the encryption key A having the same bit length as that of the plaintext 1, the exclusive OR, which is the bit string of the plaintext 1 and the encryption key A, as the encrypted data of the plaintext 1 encrypted with the encryption key A. As shown in FIG. 4(b), a similar process is performed for the plaintext 2 and the encryption key B. In FIG. 4, the "plaintext 1" is encrypted with the encryption key A, but a "hash value of the plaintext 1" or another "ciphertext of the plaintext 1 by a cryptosystem" instead of the "plaintext 1" may be encrypted with the encryption key A.

FIG. 5 is an explanatory diagram of an example of the process for generating the key exchange key for exchanging the encryption key B for the encryption key (S300) A in the embodiment of the present invention.

As shown in FIG. 5, the key exchange key (D200) for exchanging B for A is the exclusive OR which is the bit string of the encryption key B and the encryption key A.

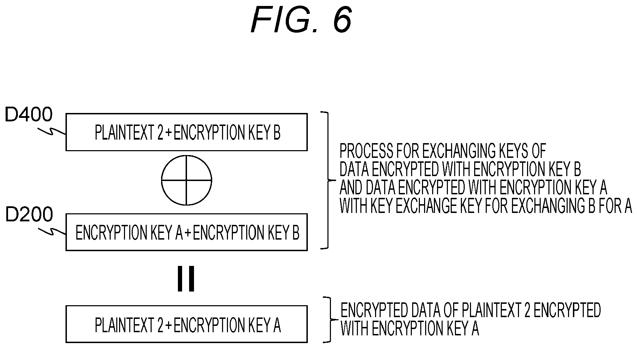

FIG. 6 is an explanatory diagram of an example of the key exchange process (S600) using the key exchange key (D200) for exchanging the encryption key B for the encryption key A in the embodiment of the present invention.

As shown in FIG. 6, the data-provider terminal 100 outputs the plaintext 2 encrypted with the encryption key A by calculating the exclusive OR of the ciphertext (D400) encrypted with the encryption key B and the key exchange key (D200) for exchanging the encryption key B for the encryption key A to delete the encryption key B due to the nature of an exclusive OR.

Note that, the present invention is not limited to the above embodiment, and various modifications can be made within the scope of the gist thereof.

For example, it has been described that the number of public-data-provider terminals 200 is one in the present embodiment, but the data analysis system may include a plurality of public-data-provider terminals 200-1, 200-2, ..., and 200-n. In this case, the public-data-provider terminals 200-1, ..., and 200-n hold decryption keys B-1, B-2, ..., and B-n respectively, and encryption keys B-1, B-2, ..., and B-n respectively, and transmit the respective encryption keys to the data-provider terminal 100. The data-provider terminal 100 generates respective key exchange keys corresponding to the respective encryption keys, such as a key exchange key for exchanging the encryption key B-1 for the encryption key A, a key exchange key for exchanging the encryption key B-2 for the encryption key A, ..., a key exchange key for exchanging the encryption key B-n for the encryption key A (S300) and transmits them to the analyzer terminal 300. The analyzer terminal 300 may perform the key exchange process for converting the encrypted public data received from each public data provider into ciphertext encrypted with each encryption key A with each key exchange key (S600) and perform the encryption-state analysis process (S800).

The above encryption keys B-1, B-2, ..., and B-n may be different from each other or may be the same. If these encryption keys are the same, the analyzer terminal 300 can perform the key exchange process (S600) to the encrypted public data received from each public-data-provider terminal with one key exchange key.

Similarly, it has been described that the number of data-provider terminals 100 is one in the present embodiment, but the data analysis system may include a plurality of data-provider terminals 100-1, 100-2, ..., and 100-n. Furthermore, similarly to the above, the analyzer terminal 300 may perform the encryption-state analysis process (S800) after exchanging the key of the encrypted data of each of the data-provider terminals 100-1, 100-2, ..., and 100-n for the encryption key A by holding the key exchange key beforehand.

Specifically, for example, a key-administrator terminal (not shown) is further connected to the network 400, and the key-administrator terminal may generate and distribute a plurality of encryption keys A-1, A-2, ..., and A-n to a plurality of data-provider terminals 100-1, 100-2, ..., and 100-n respectively. The key-administrator terminal can also be implemented by a computer similar to the data-provider terminal 100 shown in FIG. 2, for example.

For example, when the data-provider terminal 100-1 requests the analyzer terminal 300 to analyze, in addition to the data held by itself, data held by other data-provider terminals 100-2, ..., and 100-n, the data-provider terminals 100-1, 100-2, ..., and 100-n encrypt respective pieces of data held by themselves with respective encryption keys A-1, A-2, ..., and A-n held by themselves (S400), and transmit the respective pieces of encrypted data (D300) to the analyzer terminal 300.

On the other hand, the key-administrator terminal generates and transmits a key exchange key for exchanging the encryption key A-2 for the encryption key A-1, ..., and a key exchange key for exchanging the encryption key A-n for the encryption key A-1 to the data-provider terminal 100-1, and the data-provider terminal 100-1 transmits these key exchange keys to the analyzer terminal 300. Alternatively, the key-administrator terminal may directly transmit the generated key exchange keys to the analyzer terminal 300.

By performing the key exchange process (S600) for the encryption key A-1 using the received key exchange keys, the analyzer terminal 300 can perform the encryption-state analysis process (S800) to the respective pieces of encrypted data provided by the data-provider terminals 100-1, 100-2, ..., and 100-n.

Furthermore, by performing the key exchange process for the encryption key A-1 to public data transmitted from one or more public-data-provider terminals 200 by the described method, the encryption-state analysis process (S800) can be performed to the encrypted public data provided by one or more public-data-provider terminals 200 in addition to the data provided by a plurality of data-provider terminals 100.

According to the above embodiment of the present invention, the data-provider terminal 100 encrypts and outputs analysis data held by itself, but it is unnecessary to pass the encryption key A used for the encryption and the decryption key A to be used for the decryption to the analyzer terminal 300 or the like. In addition, the data-provider terminal 100 generates and passes a key exchange key for exchanging the encryption key B for the encryption key A to the analyzer terminal 300, but it is extremely difficult to guess the encryption key A and the decryption key A from the key exchange key. This protects the data privacy of the analysis data provider. Furthermore, as described above, the data-provider terminal 100 needs to perform an encryption process to analysis data and a process for generating a key exchange key, but does not need to perform an encryption process to public data. Accordingly, the processing load on the analysis data provider is reduced. By exchanging encryption keys of encrypted public data with a key exchange key acquired from the data-provider terminal 100, it is possible for the analyzer terminal 300 to perform an analysis process using an encryption analysis query acquired from the data-provider terminal 100 to both the encrypted data acquired from the data-provider terminal 100 and the encrypted public data acquired from the public-data-provider terminal 200. This enables to analyze data to which open data available to the public is added as an input data source.

Note that, the present invention is not limited to the above embodiment and includes various modifications. For example, the above embodiment has been described in detail in order for the present invention to be easily understood, and is not necessarily limited to those having all the described configurations. Furthermore, other configurations can be added, deleted, or replaced with respect to a part of the configurations of the embodiment.

In addition, the above configurations, functions, processing units, processing means, and the like may be implemented by hardware by, for example, designing a part or all of them in an integrated circuit. Alternatively, the above configurations, functions, and the like may be implemented by software by interpreting and executing programs for implementing respective functions by a processor. Information such as programs, tables, and files that implement the functions can be stored in a storage device such as a nonvolatile semiconductor memory, a hard disk drive, or a solid state drive (SSD), or a computer-readable non-transitory data storage medium such as an IC card, a SD card, or a DVD.

Note that, control lines and information lines considered to be necessary for the description are shown, and all control lines and information lines on products are not necessarily shown. In practice, it can be considered that almost all the configurations are mutually connected.

## Claims

1. A data processing method performed by a computer system including a first computer including a first processor and a first memory connected to the first processor, a second computer including a second processor and a second memory connected to the second processor, and a third computer including a third processor and a third memory connected to the third processor, the data processing method comprising:
a first step of, by the first processor, encrypting first data stored in the first memory with a first encryption key and transmitting the first data encrypted with the first encryption key to the third computer;
a second step of, by the second processor, encrypting second data stored in the second memory with a second encryption key and transmitting the second data encrypted with the second encryption key to the third computer; and
a third step of, by the third processor, generating, with a key exchange key for exchanging the second encryption key for the first encryption key, the second data encrypted with the first encryption key from the second data encrypted with the second encryption key.

2. The data processing method according to claim 1, further comprising a fourth step of, by the third processor, performing an encryption-state analysis process to the first data encrypted with the first encryption key and the second data encrypted with the first encryption key, and transmitting a result to the first computer.

3. The data processing method according to claim 2, further comprising:
a fifth step of, by the first processor, generating an encryption analysis query with the first encryption key and transmitting the encryption analysis query to the third computer, wherein
the third processor performs the encryption-state analysis process based on the encryption analysis query in the fourth step.

4. The data processing method according to claim 1, further comprising:
a sixth step of, by the first processor, generating and storing the first encryption key in the first memory before performing the first step;
a seventh step of, by the second processor, generating and storing the second encryption key in the second memory before performing the second step;
an eighth step of, by the second processor, transmitting the second encryption key to the first computer before the third processor performs the third step; and
a ninth step of, by the first processor, generating the key exchange key for exchanging the second encryption key for the first encryption key based on the first encryption key and the second encryption key, and transmitting the key exchange key to the third computer before the third processor performs the third step.

5. A data processing system comprising:
a first computer including a first processor and a first memory connected to the first processor;
a second computer including a second processor and a second memory connected to the second processor; and
a third computer including a third processor and a third memory connected to the third processor, wherein
the first processor encrypts first data stored in the first memory with a first encryption key and transmits the first data encrypted with the first encryption key to the third computer,
the second processor encrypts second data stored in the second memory with a second encryption key and transmits the second data encrypted with the second encryption key to the third computer, and
the third processor generates, with a key exchange key for exchanging the second encryption key for the first encryption key, the second data encrypted with the first encryption key from the second data encrypted with the second encryption key.

6. The data processing system according to claim 5, wherein the third processor performs an encryption-state analysis process to the first data encrypted with the first encryption key and the second data encrypted with the first encryption key, and transmits a result to the first computer.

7. The data processing system according to claim 6, wherein
the first processor generates an encryption analysis query with the first encryption key and transmits the encryption analysis query to the third computer, and
the third processor performs the encryption-state analysis process based on the encryption analysis query.

8. The data processing system according to claim 5, wherein
the first processor generates and stores the first encryption key in the first memory before encrypting the first data with the first encryption key,
the second processor generates and stores the second encryption key in the second memory before encrypting the second data with the second encryption key,
the second processor transmits the second encryption key to the first computer before the third processor generates the second data encrypted with the first encryption key, and
the first processor generates the key exchange key for exchanging the second encryption key for the first encryption key based on the first encryption key and the second encryption key, and transmits the key exchange key to the third computer before the third processor generates the second data encrypted with the first encryption key.
